# EUROPÄISCHE PATENTSCHRIFT

(11) **EP 2 329 934 B1**
(45) Veröffentlichungstag und Bekanntmachung des Hinweises auf die Patenterteilung: **28.10.2015**
(21) Anmeldenummer: 10193463.6
(22) Anmeldetag: 02.12.2010
(51) Int. Cl.: B29C 49/68, B29C 49/06, B29B 13/02, B29C 49/42, B29C 35/08

(54) **Ofen zum Konditionieren von Vorformlingen**
Oven for conditioning pre-forms
Four pour le conditionnement d'ébauches

(30) Priorität: 04.12.2009 DE 102009047537
(43) Veröffentlichungstag der Anmeldung: 08.06.2011
(73) Patentinhaber: Krones AG, 93073 Neutraubling (DE)
(72) Erfinder: Winzinger, Frank, 93049, Regensburg (DE); Holzer, Christian, 84069, Schierling (DE); Schönberger, Wolfgang, 93179, Brennberg (DE); Senn, Konrad, 93059, Regensburg (DE); Wutz, Andreas, 93426, Roding (DE)
(74) Vertreter: Grünecker Patent- und Rechtsanwälte PartG mbB

(56) Entgegenhaltungen:
- EP-A1- 0 849 067
- WO-A2-2006/005324
- DE-A1-102006 015 853
- GB-A- 2 074 496
- JP-A- 60 040 227
- US-A- 5 308 233

## Beschreibung

Die Erfindung betrifft einen Ofen zum Konditionieren von Vorformlingen nach dem Oberbegriff des Anspruchs 1.

Im Blas- bzw. Streck-Blasverfahren herzustellende Behälter werden aus sog. Vorformlingen bzw. Preforms geformt, die vor dem eigentlichen Blasvorgang auf eine gewünschte Prozesstemperatur erwärmt werden müssen. Um die rotationssymmetrischen Vorformlinge, die in der Regel standardisierte Wanddicken aufweisen, beim Blasen in Behälter mit einer bestimmten Form und Wandstärke umformen zu können, sind einzelne Wandbereiche des Vorformlings in einem Ofen, vorzugsweise mit Infrarotstrahlung, dosiert zu erwärmen. Zu diesem Zweck wird üblicherweise ein kontinuierlicher Strom Vorformlinge durch einen Ofen mit entsprechend angepassten Bestrahlungsabschnitten geleitet. Ein Problem derartiger Öfen ist es jedoch, einen möglichst großen Anteil der abgestrahlten Wärmeleistung gezielt in die Vorformlinge einzubringen.

Als Alternative hierzu schlägt die Offenlegungsschrift DE 10 2006 015853 A1 vor, Vorformlinge in einzelnen, die Vorformlinge jeweils umfänglich umschließenden Bestrahlungskammern zu erwärmen, wobei die einzelnen Kammern karussellförmig angeordnet sind. Dabei wird jeder Vorformling sowohl von der als keramischen Infrarotstrahler ausgebildeten Innenwand der Kammer als auch von einem stabförmigen Infrarotstrahler, der in den Vorformling eingeführt wird, erwärmt. Der Vorformling ist dabei im Wesentlichen vollständig innerhalb der Bestrahlungskammer angeordnet.

In der DE 10 2006 015853 A1 bleibt jedoch offen, wie die Beschickung des Ofens mit Vorformlingen bzw. deren Entnahme in effizienter Weise zu gestalten ist, um einen wirtschaftlichen Betrieb des Karussellofens zu gewährleisten. Es tritt jedoch gerade bei der Übergabe an einem Einlaufsternrad oder einem Auslaufsternrad das Problem auf, eine dreidimensionale Positionsänderung des Vorformlings in möglichst kurzer Zeit und mit größtmöglicher Übergabesicherheit zu bewerkstelligen und die Vorformlinge mit ausreichender Genauigkeit in den einzelnen Heizkammern zu platzieren.

Es besteht somit Bedarf für einen in dieser Hinsicht verbesserten Ofen mit separaten Heizkammern.

Diese Aufgabe wird mit einem Ofen gelöst, der die im Kennzeichen des Anspruchs 1 definierten Merkmale umfasst. Demnach ist eine Hubvorrichtung zum Heben und Senken der Haltevorrichtung für die Vorformlinge und/oder zum Heben und Senken der Heizkammer vorgesehen, um zwischen einer Beschickungs- oder Entnahmestellung, bei der der Vorformling in Richtung seiner Hauptachse mit der Heizkammer nicht überlappt, und einer Bestrahlungsstellung, bei der ein Abschnitt des Vorformlings innerhalb der Heizkammer angeordnet ist, zu wechseln. Dies ermöglicht eine einfache seitliche bzw. radiale Übergabe der Vorformlinge von einem herkömmlichen Einlaufstern, wie z.B. einem Teilungsverzugsstern, und eine entsprechende Übergabe an einem herkömmlichen Auslaufstern. Somit müssen an dem Einlauf- bzw. Auslaufstern keine Hubvorrichtungen vorgesehen werden. Die Vorteile der Erfindung werden dadurch ermöglicht, dass die Hubvorrichtungen einzelner Heizmodule unabhängig voneinander angesteuert werden können.

Bei einer bevorzugten Ausführungsform umfassen die Heizmodule ferner einen Heizstab zum Bestrahlen des Vorformlings mit Infrarotstrahlung, und die Hubvorrichtung ist ferner zum Heben und Senken der Haltevorrichtung und/oder des Heizstabs eingerichtet, um zwischen einer Beschickungs- oder Entnahmestellung, bei der die Haltevorrichtung und der Vorformling in der Richtung seiner Hauptachse außerdem mit dem Heizstab nicht überlappen, und einer Bestrahlungsstellung, bei der außerdem ein Abschnitt des Heizstabs innerhalb des Vorformlings angeordnet ist, zu wechseln. Dadurch wird gewährleistet, dass auch bei zusätzlich vorgesehenem Heizstab eine Übergabe von einem herkömmlichen Einlaufstern bzw. an einem herkömmlichen Auslaufstern in einfacher Weise möglich ist, d.h. in seitlicher bzw. radialer Richtung.

Als Infrarotstrahler eignen sich beispielsweise Heizwendeln, in eine keramische Schicht eingebettete Heizwendeln, Leuchtdioden, Laser und/oder Halogenstrahler. Es können aber auch andere Strahlungsquellen eingesetzt werden. Deren Emission ist nicht zwangsläufig auf infrarotes Licht beschränkt

Der Heizstab kann auch als reflektierender Stab ausgeführt sein, der den Vorformling nur passiv beheizt.

Der Heizstab kann auch eine Funktionskeramik umfassen, die Strahlung absorbiert und Strahlung einer anderen, insbesondere einer größeren Wellenlänge aussendet.

Vorzugsweise ist an dem Heizrad ein mit dem Heizrad axiales Stützrad zum Abstützen der Vorformlinge an einem jeweils an dem Vorformling ausgebildeten Tragring vorgesehen, und die Haltevorrichtung umfasst eine Haltekappe, die auf einen Mündungsbereich des Vorformlings abgesenkt werden kann, um den Tragring des Vorformlings gegen das Stützrad zu pressen, wobei in der Haltekappe insbesondere eine Ausnehmung zum Durchführen eines Heizstabs ausgebildet ist. Mit dieser Anordnung kann der Vorformling in einer Phase zwischen der Übernahme von einem Einlaufstern und dem Absenken in die Heizkammer stabilisiert werden. Dies ermöglicht eine besonders schnelle Übergabe der Vorformlinge von einem Einlaufstern an die Haltevorrichtung bzw. von der Haltevorrichtung in einen Auslaufstern, so dass die Zeit, während der der Einlauf- bzw. Auslaufstern den Vorformling zusätzlich stabilisieren bzw. begleiten muss, reduziert werden kann.

Vorzugsweise umfasst die Haltevorrichtung einen Greifer zum Halten des Vorformlings an einem Mündungsbereich des Vorformlings, wobei in dem Greifer insbesondere eine Ausnehmung zum Durchführen eines Heizstabs ausgebildet ist. Dies ermöglicht besonders kurze Übergabezeiten zwischen Einlauf- bzw. Auslaufstern und der Haltevorrichtung. Die Übergabe kann somit erfolgen, bevor der Vorformling und die Heizkammer in eine im Wesentlichen zueinander koaxiale Position gebracht worden sind. Der Greifer kann sowohl als Innen- als auch als Außengreifer ausgebildet sein.

Vorzugsweise ist der Greifer eine Rollenklammer, die so ausgebildet ist, dass der Vorformling gleichzeitig gehalten und um seine Hauptachse gedreht werden kann. Dies erleichtert eine gleichmäßige Erwärmung des Vorformlings in der Heizkammer, insbesondere in Kombination mit einem von oben an dem Mündungsbereich des Vorformlings angreifenden Rotationsantrieb.

Bei einer bevorzugten Ausgestaltung ist an der Heizkammer eine segmentierte Auflageplatte für einen an dem Vorformling ausgebildeten Tragring vorgesehen, wobei sich die Segmente der Auflageplatte zum Einführen des Vorformlings in die Heizkammer auseinander bewegen lassen. Dies vereinfacht das Einführen des Vorformlings in die Heizkammer insbesondere bei Vorformlingen, bei denen der Durchmesser des Tragrings nur geringfügig größer ist als der Außendurchmesser des in die Heizkammer einzuführenden Teils des Vorformlings.

Vorzugsweise sind an den Segmenten der Auflageplatte Greifelemente vorgesehen, die durch Zusammenführen der Segmente mit einem Mündungsbereich des Vorformlings in Eingriff gebracht werden können, um den Vorformling radial und/oder axial bezüglich der Heizkammer zu fixieren. Dadurch kann der Vorformling auf einfache Weise besonders stabil bezüglich der Heizkammer fixiert werden, insbesondere auch gegen ein Verkippen. Ein separater, radial bzw. gegen ein Verkippen wirkender Haltemechanismus kann dadurch eingespart werden.

Bei einer günstigen Ausführungsform ist an der Heizkammer eine segmentierte Auflageplatte für einen an dem Vorformling ausgebildeten Tragring vorgesehen, wobei sich die Segmente der Auflageplatte, insbesondere gegen eine Federvorspannung, zum Ausstoßen des Vorformlings in axialer Richtung auseinander drücken lassen, insbesondere durch Einklappen der Segmente in die Heizkammer, und wobei an der Heizkammer ferner eine, insbesondere gegen eine Federvorspannung, ausklappbare Bodenklappe vorgesehen ist, so dass der Vorformling durch Öffnen der Bodenklappe ausgestoßen werden kann. Dies ermöglicht ein besonders schnelles Ausstoßen des Vorformlings aus der Heizkammer. Dabei ist es insbesondere nicht nötig, den Heizstab zuvor aus dem Vorformling zurückzuziehen.

Vorzugsweise ist an der Heizkammer eine wasserdicht abschließende Bodenklappe vorgesehen, so dass die Heizkammer mit einer Reinigungsflüssigkeit geflutet und diese durch Öffnen der Bodenklappe abgelassen werden kann. Dies ermöglicht ein einfaches Reinigen der Heizkammer in einsatzfähig montiertem Zustand.

Vorzugsweise ist die Hubvorrichtung zum Heben und Senken des Heizstabs eingerichtet, wobei der Hub zwischen der Beschickungs- oder Entnahmestellung und der Bestrahlungsstellung, insbesondere eine untere Endposition des Heizstabs in der Bestrahlungsstellung, einstellbar ist. Damit kann der Hubmechanismus an unterschiedlich große Vorformlinge angepasst werden. Insbesondere kann dadurch ein zu großer Hub vermieden werden. Ebenso ist es möglich, die untere Endposition des Heizstabs genau an die Größe des Vorformlings anzupassen.

Bei einer besonders vorteilhaften Ausgestaltung ist zur Einstellung des Hubs und/oder der Endposition eine veränderliche Steuerkurve vorgesehen. Dadurch kann ein für alle Heizmodule gleichermaßen wirksamer und einfach zu realisierender Mechanismus zur Verstellung des Hubs realisiert werden.

Vorzugsweise umfasst die Hubvorrichtung einen Schlitten zum Heben und Senken des Heizstabs, wobei zur Begrenzung des Schlittenhubs, insbesondere an der unteren Endposition des Heizstabs, ein Anschlagmechanismus vorgesehen ist. Dadurch lässt sich ein, auch individuell für jedes Heizmodul einzustellender Mechanismus zum Verstellen des Hubs bereitstellen. Der Schlitten ist vorzugsweise pneumatisch, hydraulisch oder elektrisch angetrieben.

Vorzugsweise umfasst die Hubvorrichtung eine magnetische Steuerkurve zum Heben und Senken der Heizkammer, insbesondere in Verbindung mit einer in der Heizkammer vorgesehenen elektromagnetischen Heizspule oder einem an der Heizkammer vorgesehenen Permanentmagneten, um die Heizkammer durch magnetische Wechselwirkung mit der Steuerkurve zu heben bzw. zu senken. Dadurch kann eine berührungslose und somit verschleißarme Steuervorrichtung für die Hubvorrichtung bereitgestellt werden. Durch das berührungslose Wirkprinzip kann eine Kollision mit anderen mechanisch wirkenden Steuereinrichtungen der Heizkammer vergleichsweise einfach vermieden werden.

Bei einer bevorzugten Ausführungsform liegen mehrere Heizkreise in lotrechter Richtung übereinander.

Bei einer besonders günstigen Ausführungsform sind die Heizkammern auf dem Heizrad in Form konzentrischer Ringe gruppiert, wobei die Heizkammern des jeweils innen liegenden Rings in der Beschickungs- oder Entnahmestellung bezüglich der Drehlage versetzt zwischen den Heizkammern des jeweils außen liegenden Rings angeordnet sind. Dadurch kann eine besonders enge Maschinenteilung realisiert werden. Gleichzeitig ist es möglich, die Heizkammern des innen liegenden Rings durch die Zwischenräume zwischen den Heizkammern des außen liegenden Rings zu beladen bzw. zu entleeren.

Bei einer besonders günstigen Ausführungsform umfasst die Haltevorrichtung mindestens zwei schwenkbare Greifer, um einen in der Heizkammer zu erwärmenden Vorformling in der Bestrahlungsstellung und gleichzeitig mindestens einen weiteren, in der Heizkammer zuvor erwärmten Vorformling in einer Speicherstellung zu halten, wobei die Greifer so eingerichtet sind, dass bei einem Stellungswechsel ein Greifer aus der Bestrahlungsstellung in die Speicherstellung wechselt und ein Greifer aus der Speicherstellung in die Bestrahlungsstellung. Dadurch ist es möglich, die erwärmten Vorformlinge für mindestens eine weitere Umdrehung des Heizrads auf dem Heizrad mit zu transportieren, um auf diese Weise eine Ausgleichszeit bereit zu stellen, während der sich eine räumliche Temperaturverteilung in den Vorformlingen ausgleichen kann.

Vorzugsweise umfasst die Hubvorrichtung des Ofens ein gemeinsames Antriebsaggregat zum Heben/Senken der Haltevorrichtung und des Heizstabs sowie ein Hubübersetzungsmittel, insbesondere ein Getriebe, das den Heizstab und die Haltevorrichtung verbindet, um ferner den Heizstab relativ zur Haltevorrichtung mit dem Antriebsaggregat zu heben/senken. Dadurch ist ein separater Antrieb für den Heizstab oder die Haltevorrichtung entbehrlich. Ein solcher Hubmechanismus mit Hubübersetzung ist besonders zuverlässig.

Vorzugsweise umfasst das Hubübersetzungsmittel mindestens zwei Getrieberäder zum Einstellen eines Verhältnisses der Hubgeschwindigkeit der Haltevorrichtung und der Relativhubgeschwindigkeit zwischen der Haltevorrichtung und dem Heizstab. Dadurch lässt sich auf einfache und zuverlässige Weise eine Koordination der erforderlichen Linearbewegungen beim Wechsel von der Beschickungsstellung in die Bestrahlungsstellung sicherstellen. Als Getrieberäder eignen sich insbesondere Zahnräder und dergleichen. Durch Einstellen des Verhältnisses der Durchmesser der Getrieberäder lässt sich ein Übersetzungsgetriebe realisieren und die Stellwege der Haltevorrichtung und des Heizstabs an unterschiedlich große Vorformlinge und Haltevorrichtungen anpassen.

Bevorzugte Ausführungsformen der Erfindung sind in der Zeichnung dargestellt. Es zeigen:
- Fig. 1: eine schematische Draufsicht auf einen erfindungsgemäßen Ofen einer ersten Ausführungsform;
- Fig. 2: eine schematische Seitenansicht eines Heizmoduls der ersten Ausführungsform im Schnitt;
- Fig. 3a und 3b: eine erfindungsgemäße Heizkammer mit unterschiedlichen Varianten einer Auflageplatte für einen Vorformling;
- Fig. 4a, 4b und 4c: schematische Längsschnitte durch Varianten einer erfindungsgemäßen Haltevorrichtung;
- Fig. 5a und 5b: eine schematische Draufsicht auf und einen schematischen Längsschnitt durch eine Variante der erfindungsgemäßen Haltevorrichtung;
- Fig. 6: eine schematische Seitenansicht einer verstellbaren Steuerkurve zum Heben und Senken des erfindungsgemäßen Heizstabs;
- Fig. 7: eine schematische Seitenansicht eines verstellbaren Anschlagmechanismus für eine erfindungsgemäße Hubvorrichtung;
- Fig. 8: eine schematische Darstellung einer magnetisch wirkenden Steuerkurve für eine erfindungsgemäße Heizkammer;
- Fig. 9: eine schematische Seitenansicht einer alternativen Ausführungsform der Heizkammer mit einem Klappmechanismus zum Ausstoßen des Vorformlings;
- Fig. 10: eine zweite Ausführungsform des erfindungsgemäßen Ofens mit zwei konzentrisch und bezüglich der Drehlage versetzt angeordneten Heizmodulgruppen;
- Fig. 11: eine Drahtmodell-Ansicht einer Variante der zweiten Ausführungsform, bei der zwei Heizmodulgruppen übereinander angeordnet sind;
- Fig. 12: eine dritte Ausführungsform des erfindungsgemäßen Ofens, bei dem die Haltevorrichtung jeweils zwei schwenkbare Greifer umfasst, sowie alternative Varianten der schwenkbaren Greiferanordnung; und
- Fig. 13: eine vierte Ausführungsform des erfindungsgemäßen Ofens, bei der ein gemeinsames Antriebsaggregat zum Heben/Senken der Haltevorrichtung und des Heizstabs vorgesehen ist.

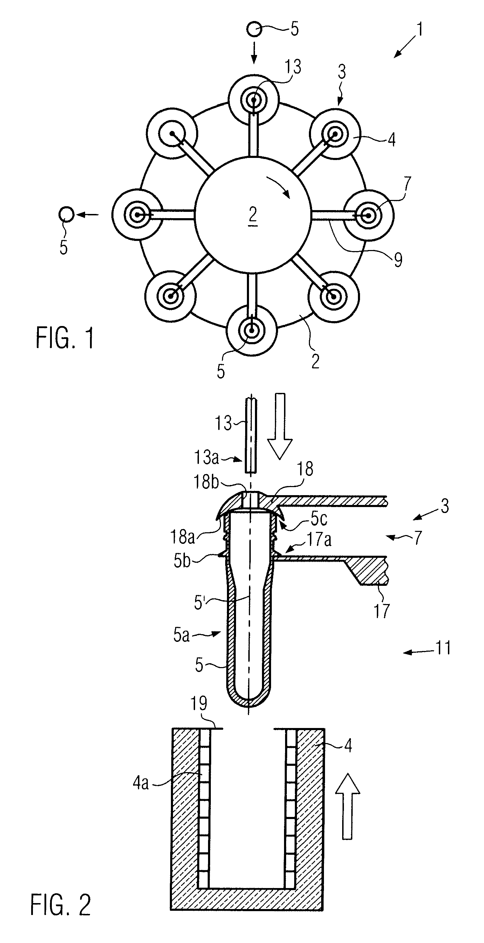

Wie Fig. 1 erkennen lässt, umfasst eine erste Ausführungsform des erfindungsgemäßen Ofens 1 ein Heizrad 2 mit umfänglich gleichmäßig an diesem verteilten Heizmodulen 3 mit je einer Heizkammer 4 zum Erwärmen eines Vorformlings 5 und mit je einer Haltevorrichtung 7 zum Halten des Vorformlings 5. An dem Heizmodul 3 ist ferner eine Hubvorrichtung 9 vorgesehen, mit der die vertikale Position bzw. eine Position in axialer Richtung bezogen auf die Längsachse 5' des Vorformlings 5 der Heizkammer 4 und/oder der Haltevorrichtung 7 eingestellt werden kann. Die Hubvorrichtung 9 dient insbesondere dazu, um zwischen einer Beschickungs- oder Entnahmestellung 11, bei der der Vorformling 5 in axialer Richtung mit der Heizkammer 4 nicht überlappt bzw. über dieser angeordnet ist, und einer Bestrahlungsstellung 12, bei der ein zu erwärmender Abschnitt 5a des Vorformlings 5 innerhalb der Heizkammer 4 angeordnet ist, zu wechseln. Die im Folgenden noch näher beschriebene Hubvorrichtung 9 kann zum Heben/Senken der Haltevorrichtung 7 und/oder der Heizkammer 4 ausgelegt sein.

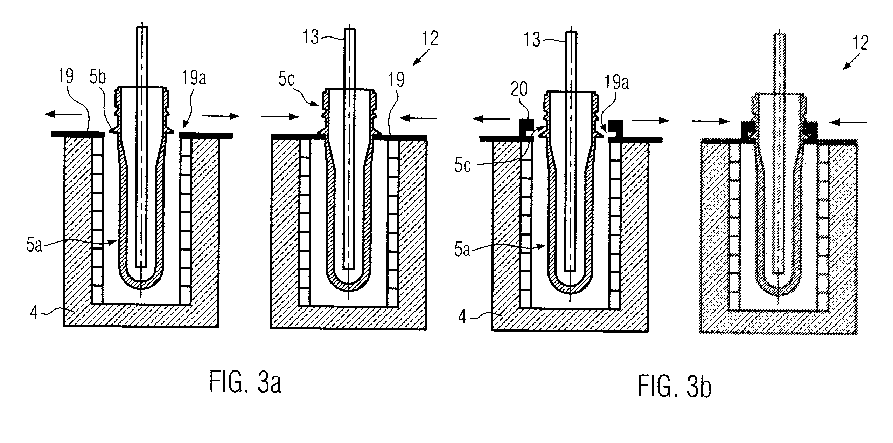

Die Heizmodule 3 umfassen vorzugsweise außerdem einen Heizstab 13, der in den Vorformling 5 mit Hilfe der Hubvorrichtung 9 zum Bestrahlen der Innenwand des Vorformlings 5 eingeführt werden kann. In Fig. 2 ist die Hubvorrichtung 9 durch Blockpfeile lediglich funktionell angedeutet. Das heißt, im Beispiel der Figur 2 werden der Heizstab 13 und die Heizkammer 4 aus der gezeigten Beschickungs- und Entnahmestellung 11 jeweils auf die Haltevorrichtung 7 bzw. den Vorformling 5 bis zum Erreichen der beispielsweise in Fig. 3a und 3b gezeigten Bestrahlungsposition 12 zu bewegt. Die Hubvorrichtung 9 könnte beispielsweise auch den Heizstab 13 und die Haltevorrichtung 7 auf die Heizkammer 4 zu bewegen oder andere geeignete Hubbewegungen ausführen, die einen Wechsel zwischen der Beschickungs- und/oder Entnahmestellung 11 und der Bestrahlungsstellung 12 erlauben.

In der Beschickungs- oder Entnahmestellung 11 überlappen die Haltevorrichtung 7 und der Vorformling 5 in Richtung seiner Hauptachse 5' nicht mit dem Heizstab 13. Dagegen ist in der Bestrahlungsstellung 12 ein Abschnitt 13a des Heizstabs 13 innerhalb des Vorformlings 5 angeordnet. Somit ist die Beschickungs- bzw. Entnahmestellung 11 im Wesentlichen dadurch charakterisiert, dass der Vorformling 5 horizontal bzw. in einer zur Hauptachse 5' im Wesentlichen senkrechten Richtung an die Haltevorrichtung 7 übergeben werden kann bzw. von dieser ausgeschleust werden kann. Dadurch ist es möglich, den Ofen 1 mit Hilfe eines herkömmlichen Einlaufsternrads 14 zu beschicken bzw. mit Hilfe eines herkömmlichen Auslaufsternrads 15 (beide in Fig. 1 nicht dargestellt) zu entladen. Dies ist so zu verstehen, dass der Einlaufstern 14 bzw. der Auslaufstern 15 bei der Übergabe keine Hubbewegung ausführen muss, sondern beispielsweise als konventioneller Teilungsverzugsstern ausgebildet sein kann.

Fig. 2 zeigt einen schematischen Längsschnitt durch das Heizmodul 3 mit einer Variante der Haltevorrichtung 7 mit einem an dem Heizrad 2 mitrotierenden Stützrad 17 und relativ dazu, insbesondere axial, beweglichen Haltekappen 18. An dem Stützrad 17 ist jedem Heizmodul 3 zugeordnet jeweils ein äußerer Auflagebereich 17a ausgebildet, an dem ein an dem Vorformling 5 ausgebildeter Tragring 5b in axialer Richtung abgestützt werden kann. Der Auflagebereich 17a kann ferner so ausgebildet sein, dass er den Vorformling 5 zusätzlich seitlich in Richtung des Stützrads 17 fixiert.

Wie in Fig. 2 angedeutet, kann die Haltekappe 18 mit einem Mündungsabschnitt 5c des Vorformlings 5 in Eingriff gebracht werden, um den Tragring 5b in axialer Richtung gegen den Auflagebereich 17a zu drücken. Vorzugsweise ist an der Haltekappe 18 ein zentrierender Bereich 18a ausgebildet, um den Mündungsbereich 5c selbstzentrierend bezüglich der Längsachse 5' des Vorformlings 5 zu halten. An der Haltekappe 18 ist ferner eine Ausnehmung 18b vorgesehen, durch die der Heizstab 13 in den Vorformling 5 eingeführt werden kann.

Die in Fig. 2 dargestellte Haltevorrichtung 7 hat den Vorteil, dass der Vorformling 5 schnell von dem Einlaufsternrad 14 an das Stützrad 17 übergeben werden kann und bereits in einer Position, bei der der Vorformling 5 noch nicht mit der Heizbuchse 4 bzw. dem Heizstab 13 ausgerichtet ist, von der Haltekappe 18 fixiert werden kann. Somit kann der Übergabeprozess zwischen dem Einlaufsternrad 14 und dem Heizrad 2 in vergleichsweise kurzer Zeit erfolgen. Das Ausrichten des Vorformlings 5 bezüglich der Heizkammer 4 bzw. des Heizstabs 13 kann dann auf dem Heizrad 2 unabhängig von der Bewegung des Einlaufsterns 14 erfolgen. Dies gilt im gleichen Maße beim Ausschleusen der fertig erwärmten Vorformlinge 5 zum Auslaufsternrad 15. Dadurch kann insbesondere die Hubvorrichtung 9 unabhängig von dem Einlaufsternrad 14 bzw. dem Auslaufsternrad 15 betrieben werden.

Wie Fig. 2 ferner zeigt, ist an der Heizkammer 4 vorzugsweise eine Auflageplatte 19 vorgesehen, auf der der Tragring 5b des Vorformlings 5 in der Bestrahlungsstellung 12 abgestützt werden kann. Somit ist es möglich, den Vorformling 5 von dem Stützrad 17 an die Auflageplatte 19 zu übergeben. Hierzu könnte beispielsweise die Auflagefläche 17a des Stützrads 17 beweglich ausgebildet sein und bei der Übergabe des Vorformlings 5 an die Auflageplatte 19 vom Tragring 5b abgezogen werden.

In der Heizkammer 4 sind Heizelemente 4a zum Bestrahlen des Vorformlings 5 vorgesehen, wie beispielsweise Heizwendeln, die vorzugsweise in eine keramische Schicht eingebettet sind. Aber auch Leuchtdioden, Laser, Halogenstrahler oder eine beliebige Kombination verschiedener Strahler sind denkbar. Es ist auch möglich, keramische Schichten vorzusehen, die das Emissionsspektrum eines Strahlers 4a, beispielsweise Hellstrahlung, in Strahlung mit einer grö-ßeren Wellenlänge transformieren. Derartige Funktionskeramiken, aber auch reflektierende Schichten, sind insbesondere am Heizstab 13 vorteilhaft, um beispielsweise einen passiv beheizten Heizstab 13 zu realisieren.

Die Fig. 3a und 3b zeigen Teilansichten des Heizmoduls 3 in der Bestrahlungsposition 12, wobei an den Heizkammern 4 jeweils eine bewegliche, segmentierte Auflageplatte 19 vorgesehen ist, deren Bewegungsrichtung jeweils durch horizontale Pfeile gekennzeichnet ist. Demnach können die Segmente der Auflageplatte 19 zum Beladen der Heizkammer 4 mit dem Vorformling 5 beispielsweise voneinander weg gezogen werden, um das Beladen insbesondere bei Vorformlingen 5 mit vergleichsweise großem Außendurchmesser zu erleichtern. Es wäre selbstverständlich auch denkbar, die Auflageplatte 19 bzw. einzelne Segmente der Auflageplatte 19 zu schwenken oder zu kippen.

Um den Vorformling 5 in seiner Bestrahlungsposition 12 bezüglich der Heizkammer 4 zu fixieren, werden die Segmente der Auflageplatte 19 zusammengeschoben, wobei sie im zusammen geschobenen Zustand eine Auflagefläche 19a für den Tragring 5b des Vorformlings 5 ausbilden. Dies ist insbesondere dann vorteilhaft, wenn der Durchmesser des Tragrings 5b nur geringfügig größer ist als der Außendurchmesser des zu erwärmenden Abschnitts 5a des Vorformlings 5. In Fig. 3a ist die Auflageplatte 19 zur axialen Fixierung und zur Zentrierung des Vorformlings 5 in der Heizkammer 4 ausgelegt.

An der Auflageplatte 19 der Fig. 3b sind zusätzlich Greifelemente 20 ausgebildet, die mit dem Mündungsbereich 5c des Vorformlings 5 in Eingriff gebracht werden können, um den Vorformling 5 auch gegen ein Verkippen gegen die Heizkammer 4 zu sichern. Die Greifelemente 20 können außerdem die Zentrierung und axiale Fixierung des Vorformlings 5 weiter verbessern.

Um die Heizmodule 3 an Vorformlinge 5 mit unterschiedlichen Außendurchmessern anpassen zu können, ist es vorteilhaft, die Auflageplatte 19 als schnell wechselbares Garniturenteil auszubilden. In diesem Fall könnten die Auflageplatte 19 über eine schnell wechselbare Kupplung (nicht dargestellt) mit dem Heizmodul 3 bzw. der Heizkammer 4 verbunden werden. Als schnell wechselbare Kupplung eignet sich z.B. eine magnetische Kupplung.

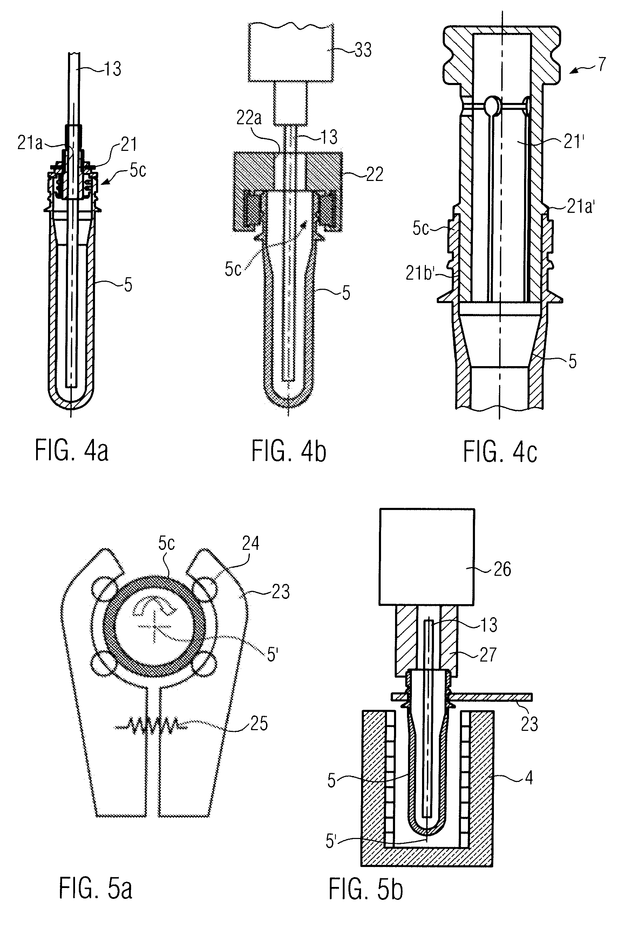

Die Fig. 4a bis 4c zeigen alternative Ausführungsformen der Haltevorrichtung 7. Demnach kann die Haltevorrichtung 7 beispielsweise einen hohlgebohrten Innengreifer 21 oder einen hohlgebohrten Außengreifer 22 mit einer Ausnehmung 21 a bzw. 22a zum Durchführen des Heizstabs 13 umfassen. Die Greifer 21, 22 sind jeweils so ausgebildet, dass sie mit dem Mündungsbereich 5c des Vorformlings 5 derart in Eingriff gebracht werden können, dass der Vorformling 5 an der Haltevorrichtung 7 in einer axial und gegen ein Verkippen gesicherten Position gehalten wird. Die Greifer 21, 22 könnten den Mündungsbereich 5c beispielsweise formschlüssig, aber auch kraftschlüssig halten, z.B. mit Hilfe elastischer Greifbacken (nicht dargestellt). Die Vorteile der Greifer 21, 22 sind denen der Anordnung aus Fig. 2 vergleichbar. Insbesondere ermöglichen auch die Greifer 21, 22 eine besonders schnelle und sichere Übernahme von dem Einlaufsternrad 14 bzw. Übergabe an das Auslaufsternrad 15. Mit den Greifern 21, 22 lässt sich der Vorformling 5 außerdem besonders einfach auf der Auflageplatte 19 absetzen.

Wie die Fig. 4c verdeutlicht, kann die Haltevorrichtung 7 nicht nur Greifer oder Backen aufweisen, sondern auch geschlitzt und vorgespannt sein. Beispielsweise ist eine Zange 21' zum Halten des Vorfomlings 5 an dessen Mündungsbereich 5c, insbesondere an der Innenseite des Mündungsbereichs 5c, denkbar. Die Zange 21' könnte wenigstens eine sich in Richtung eines Auflagerings 21 a' für den Vorformling 5 verjüngende äußere Anlagefläche 21 b' aufweisen. Dadurch kann der Vorformling 5 auf seiner Innenseite gehalten werden, ohne diesen durch die Vorspannung der Spannzange 21' in unerwünschter Weise nach unten zu drücken.

Die Fig. 5a und 5b zeigen eine alternative Ausführungsform des Außengreifers 22 in Form einer Rollenklammer 23, die es ermöglicht, den Vorformling 5 in einer axial und radial fixierten Position um seine Hauptachse 5' drehbar zu lagern. Eine derartige Rollenklammer 23 könnte beispielsweise Rollen 24 und eine Zugfeder 25 umfassen und wäre insbesondere dazu geeignet, den Vorformling 5 an seinem Mündungsbereich 5c mit einem Rotationsantrieb 26 von oben anzutreiben. Dies ist in Fig. 5b schematisch angedeutet, wobei der Heizstab 13 in einer hier lediglich schematisch angedeuteten Hohlwelle 27 geführt werden könnte. Auch die Rollenklammer 23 ist für eine schnelle und sichere Übergabe der Vorformlinge 5 von dem Einlaufsternrad 14 bzw. an das Auslaufsternrad 15 ausgelegt.

Den beschriebenen Varianten der Haltevorrichtung 7 ist gemeinsam, dass sie in eine Beschickungs- und/oder Entnahmestellung 11 gebracht werden können, die eine besonders schnelle und einfache Übergabe des Vorformlings 5 von dem Einlaufsternrad 14 bzw. an das Auslaufsternrad 15 ermöglicht. Der Wechsel der Haltevorrichtung 7 in die Bestrahlungsstellung 12 kann dann unabhängig von dem Einlaufsternrad 14 bzw. dem Auslaufsternrad 15 auf dem sich weiter drehenden Heizrad 2 erfolgen. Dadurch lässt sich die Prozessgeschwindigkeit insgesamt optimieren, da ein sowohl von der Haltevorrichtung 7 als auch vom Einlaufsternrad 14 bzw. Auslaufsternrad 15 jeweils gemeinsam abzudeckender Übergabebereich vergleichsweise klein gehalten werden kann bzw. nach erfolgter Übergabe des Vorformlings 5 schnell wieder verlassen werden kann.

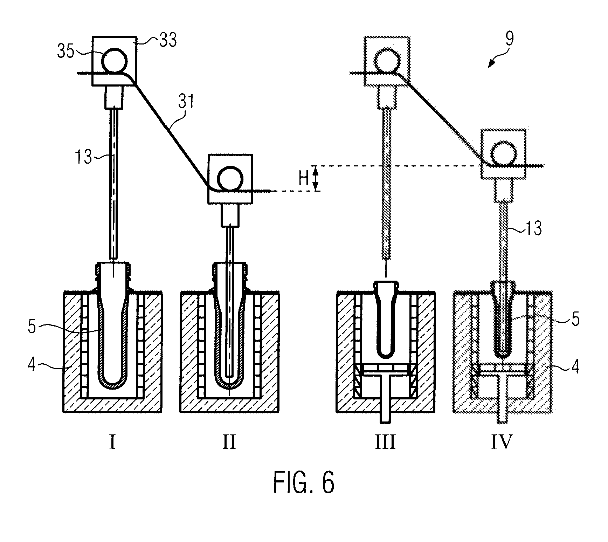

Die Fig. 6 verdeutlicht die Funktionsweise der Hubvorrichtung 9 anhand einer einstellbaren Steuerkurve 31. Demnach wird mit der Steuerkurve 31 die vertikale Position des Heizstabs 13 eingestellt, wobei dieser an einem Schlitten 33 befestigt ist, der der Steuerkurve 31 mit Hilfe einer Kurvenrolle 35 folgt.

In der Fig. 6 ist auf der linken Seite (Positionen I und II) eine Situation beim Konditionieren eines vergleichsweise großen Vorformlings 5 dargestellt und zum Vergleich auf der rechten Seite (Positionen III und IV) eine Situation beim Konditionieren eines vergleichsweise kleinen Vorformlings 5. Der Heizstab 13 ist jeweils von einer oberen Position I bzw. III bis zu einer der Bestrahlungsstellung 12 entsprechenden unteren Position II bzw. IV in den Vorformling 5 abzusenken. Um insbesondere die untere Endposition des Heizstabs 13 bei den Positionen II bzw. IV an die Größe des Vorformlings 5 anzupassen, kann der Hub der Steuerkurve 31, insbesondere deren untere Endposition, um den Betrag H verstellt werden. Die in der Fig. 6 dargestellte höhenverstellbare Steuerkurve 31 bietet im Vergleich zu einer nicht verstellbaren Steuerkurve den Vorteil, dass ein kompletter Austausch der Kurvensteuerung bzw. des Heizstabs 13 bei einem Wechsel zwischen unterschiedlich großen Vorformlingen 5 entbehrlich ist. Die bei den Positionen III und IV zusätzlich dargestellte Verstellung des Heizkammerbodens hat in diesem Zusammenhang lediglich illustrativen Charakter.

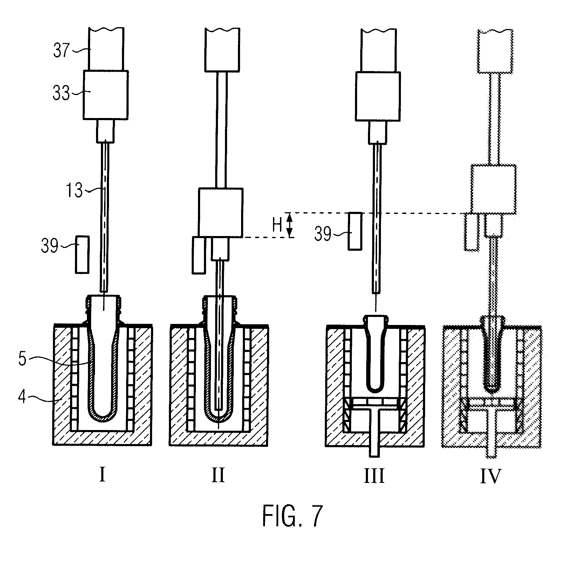

In Fig. 7 ist eine Variante der Hubvorrichtung 9 dargestellt, mit der im Wesentlichen die gleichen Vorteile zu erzielen sind wie mit der Anordnung aus Fig. 6. Der Unterschied besteht im Wesentlichen darin, dass der Schlitten 33 für den Heizstab 13 direkt durch einen pneumatisch oder hydraulisch betriebenen Zylinder 37 bewegt wird. Um auch hier die Eintauchtiefe des Heizstabs 13 in den Vorformling 5 einzustellen, wird in Analogie zu der verstellbaren Kurve 31 der Fig. 6 ein Endanschlag 39 zur Hubbegrenzung eingestellt, um jeweils eine untere Endposition des Schlittens 33 fest zu legen. Die Positionen I bis IV der Fig. 7 entsprechen im Wesentlichen denen der Fig. 6, so dass auch in der Fig. 7 eine Höhenverstellung um den Betrag H zur Anpassung der Hubvorrichtung 9 an die Größe des Vorformlings 5 vorgenommen werden kann. Als Alternative zu dem Zylinder 37 könnte auch ein Linearmotor oder ein Elektromotor mit einer Spindel verwendet werden (nicht dargestellt). In diesem Fall wäre der mechanische Endanschlag 39 entbehrlich, da die untere Endposition des Heizstabs 13 dann direkt durch die Motorsteuerung festgelegt werden könnte.

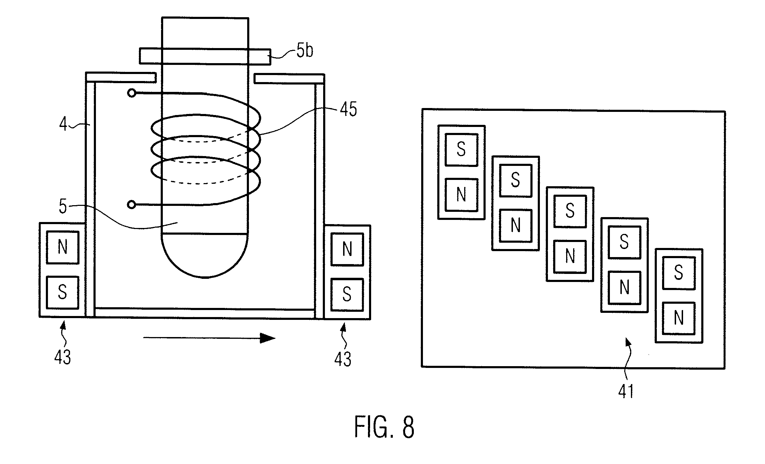

Die Fig. 8 zeigt eine Variante der Hubvorrichtung 9 zum Heben und Senken der Heizkammer 4 mit Hilfe einer magnetischen Steuerkurve 41 (N = Nordpol; S = Südpol). Diese wirkt beispielsweise mit an der Heizkammer 4 vorgesehenen Permanentmagneten 43 beim Entlanglaufen (durch einen Pfeil angedeutet) der Heizkammer 4 an der Steuerkurve 41 zusammen. Alternativ wäre es auch denkbar, die magnetische Wechselwirkung mit der feststehenden magnetischen Steuerkurve 41 temporär elektromagnetisch durch den Stromfluss in einer Heizwendel 45 der Heizkammer 4 zu erzeugen, wie in Fig. 8 vereinfacht schematisch angedeutet. In diesem Fall wären die Permanentmagneten 43 an der Heizkammer 4 entbehrlich. Eine derartige magnetische Höhenverstellung der Heizkammer 4 bietet den Vorteil, dass sie berührungslos erfolgen kann, um zum Einen mechanischen Verschließ zu reduzieren und zum Anderen Platz für weitere Steuerungseinrichtungen zu schaffen.

Es versteht sich von selbst, dass die zuvor beschriebenen Varianten der Hubvorrichtung 9 beliebig miteinander kombiniert werden können. Insbesondere ist es möglich, die bezüglich des Heizstabs 13 dargestellten Varianten auch zum Heben und Senken der Haltevorrichtung 7 und/oder der Heizkammer 4 zu verwenden. Ebenso wäre es möglich, die Haltevorrichtung 7 und/oder den Heizstab 13 mit einer magnetischen Steuerkurve 41 zu heben und/oder zu senken.

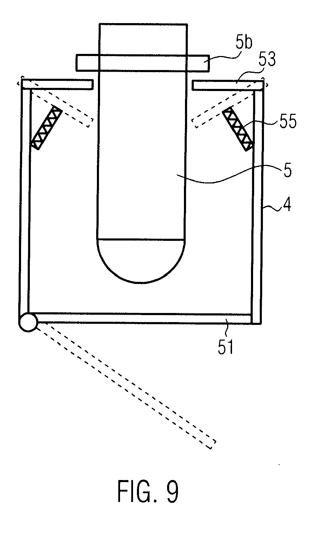

Fig. 9 zeigt eine Variante der Heizkammer 4, die es ermöglicht, den Vorformling 5 im Wesentlichen in der gleichen Richtung aus der Heizkammer 4 auszustoßen, in der er in die Heizkammer 4 eingeführt wird. Zu diesem Zweck ist an der Heizkammer 4 eine nach außen klappbare Bodenklappe 51 vorgesehen, sowie mindestens eine nach innen klappbare Auflageplatte 53. Die Auflageplatte 53 kann so ausgeführt sein, dass sie von dem Tragring 5b des Vorformlings 5 gegen die Vorspannung einer Feder 55 nach innen gedrückt werden kann (in die gestrichelt gezeichnete Position), so dass der Tragring 5b an der Auflageplatte 53 vorbei in die Heizkammer 4 geschoben werden kann. Ebenso ist es vorteilhaft, wenn die Bodenklappe 51 gegen die Vorspannung einer Feder (nicht dargestellt) nach unten gedrückt werden kann (siehe gestrichelt gezeichnete Position). Es sind allerdings auch andere Verschlussmechanismen für die Bodenklappe 51 bzw. die Auflageplatte 53 denkbar. Die Bodenplatte 51 kann insbesondere wasserdicht ausgeführt sein, so dass die Heizkammer 4 zu Reinigungszwecken mit einer Flüssigkeit (nicht dargestellt) geflutet und nach erfolgter Reinigung durch Öffnen der Bodenklappe 51 wieder entleert werden kann. Eine solche Reinigung ist besonders vorteilhaft, da sie ohne Demontage der Heizkammer 4 erfolgen kann.

Die Auflageplatte 53 könnte allerdings auch nach oben klappbar oder verschiebbar sein, um den Vorformling 5 nach der Erwärmung aus der Heizkammer 4 auszustoßen.

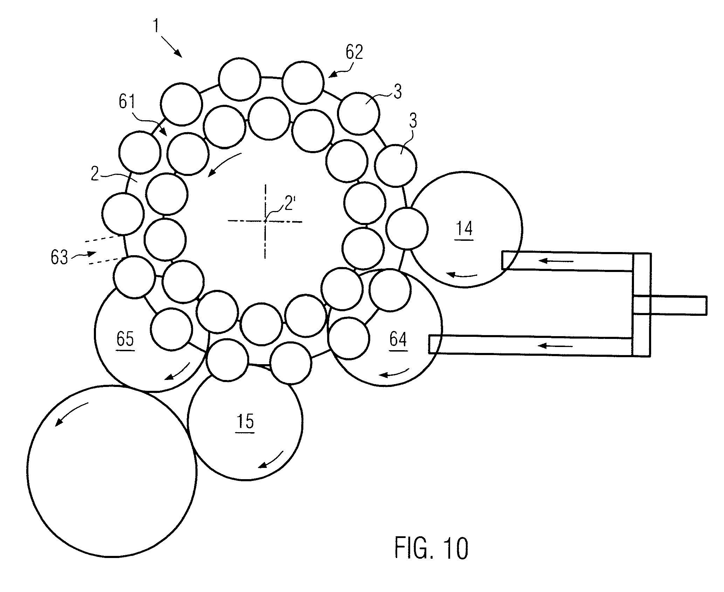

Fig. 10 zeigt eine zweite Ausführungsform des erfindungsgemäßen Ofens 1, bei dem die Heizmodule 3 am Heizrad 2 in einer besonders platzsparenden Weise angeordnet sind. Demnach sind die Heizmodule 3 in zwei ringförmigen Gruppen 61, 62 konzentrisch um die Rotationsachse 2' des Heizrads 2 angeordnet. Zur optimalen Platzausnutzung sind die Heizmodule 3 der inneren Gruppe 61 vorzugsweise in einem möglichst geringen Abstand zueinander angeordnet. Um den Zugang zu den Heizmodulen 3 der inneren Gruppe 61 beim Be- und Entladen der Heizkammern 4 zu vereinfachen, sind die Heizmodule 3 der inneren Gruppe 61 bezüglich der Drehlage bzw. Maschinenteilung vorzugsweise jeweils zwischen den Heizmodulen 3 der äußeren Gruppe 62 angeordnet. Das heißt, bezüglich der Drehlage bzw. Maschinenteilung wechseln sich die Heizmodule 3 der inneren und äußeren Gruppen 61, 62 vorzugsweise ab. Dadurch wird gewährleistet, dass die Heizmodule 3 der inneren Gruppe 61 jeweils über den Zwischenraum 63 zwischen den Heizmodulen 3 der äußeren Gruppe 62 radial bzw. seitlich zugänglich sind.

Vorzugsweise sind für die innere und äußere Gruppe 61, 62 jeweils getrennte Einlaufsternräder 14, 64 und getrennte Auslaufsternräder 15, 65 vorgesehen. Mit der konzentrischen Anordnung der Heizmodule 3 in mindestens zwei ringförmigen Gruppen 61, 62 lässt sich der auf dem Heizrad 2 verfügbare Platz besonders effizient nutzen.

Hierbei wäre es auch möglich, die Heizmodule 3 der inneren bzw. äußeren Gruppen 61, 62 durch getrennte Antriebe mit voneinander unabhängigen Winkelgeschwindigkeiten zu drehen. In diesem Fall könnten auch die Heizmodule 3 der äußeren Gruppe 62 mit einem kleinstmöglichen Abstand zueinander angeordnet werden und/oder mehr als zwei konzentrische Gruppen 61, 62 effizient auf einem Heizrad 2 betrieben werden.

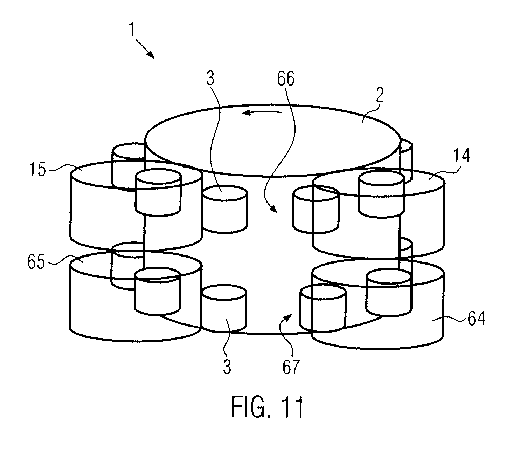

Fig. 11 zeigt schematisiert eine alternative Anordnung zweier Heizmodulgruppen 66, 67, die in lotrechter Richtung übereinander angeordnet sind, d. h. an bezüglich der Drehlage bzw. Maschinenteilung identischen Positionen. Auf diese Weise kann man bei gleichem Durchmesser des Heizrads 2 Fläche sparend die doppelte Anzahl an Vorformlingen 5 erwärmen.

Es wäre auch möglich, die Heizkammern 4 so zu gestalten, dass eine Heizkammer 4 in zwei Ebenen zwei Vorformlinge 5 aufnimmt. Bevorzugt werden die Vorformlinge 5 dann in entgegen gesetzter Ausrichtung, im oberen Kreis 66 die Mündung 5c nach oben, im unteren Kreis 67 die Mündung 5c nach unten transportiert und erhitzt.

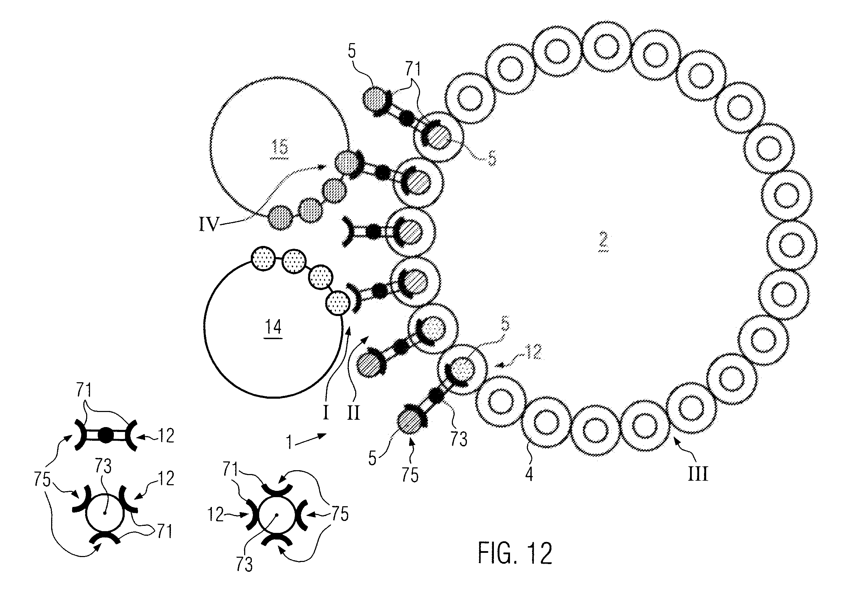

Die Fig. 12 zeigt eine dritte Ausführungsform des erfindungsgemäßen Ofens 1, bei der bereits erwärmte Vorformlinge 5 außerhalb der Heizkammern 4 in einer Speicherstellung 75 für mindestens eine weitere Umdrehung des Heizrads 2 auf diesem mitgeführt werden können, um vor der Übergabe der Vorformlinge 5 an den Auslaufstern 15 einen Temperaturausgleich in den Vorformlingen 5 zu ermöglichen.

Zu diesem Zweck sind die Haltevorrichtungen 7, wie in Fig. 12 angedeutet, mit mindestens zwei Klammern 71 zum Halten der Vorformlinge 5 versehen. An den Haltevorrichtungen 7 sind dabei jeweils eine der Anzahl der Klammern 71 entsprechende Anzahl von Stellungen der Klammern 71 vorgesehen, die die Klammern 71 jeweils nacheinander einnehmen, wobei ein Stellungswechsel der Klammern 71 einmal pro Umdrehung des Heizrads 2 erfolgt. Sind pro Haltevorrichtung 7 zwei Klammern 71 vorgesehen, wie in Fig. 11 dargestellt, vertauschen die Klammern 71 jeweils nach einer Umdrehung des Heizrads 2 ihre Stellung gegeneinander. Im Beispiel würde dies einer Drehung der Klammern 71 um 180° um die gemeinsame Drehachse 73 entsprechen.

Alternativ könnte an jeder Haltevorrichtung 7 aber auch eine größere Anzahl von Klammern 71 vorgesehen sein, beispielsweise drei oder vier. In diesen Fällen wären an der Haltevorrichtung 7 entsprechend drei bzw. vier Stellungen der Klammern 71 vorgesehen, wobei die Klammern 71 dann jeweils pro Umdrehung des Heizrads 2 um einen Betrag von 120° bzw. 90° weiter gedreht würden, um die jeweils nachfolgende Stellung an der Haltevorrichtung 7 einzunehmen. Die Anzahl der Speicherstellungen 75 pro Halterung 7 ist dann jeweils die Gesamtanzahl der Stellungen pro Halterung 7 minus eins, wie in Fig. 12 links unten angedeutet.

Im Beispiel wird davon ausgegangen, dass die Klammern 71 einer Haltevorrichtung 7 jeweils starr über den gemeinsamen Drehpunkt 73 miteinander verbunden sind. Dies ist jedoch nicht zwingend erforderlich. Es wäre ebenso möglich, die Klammern 71 einer Haltevorrichtung 7 individuell und/oder unter Zuhilfenahme anderer Schwenk- und/oder Hubvorrichtungen zu bewegen. Entscheidend ist hierbei, dass die Vorformlinge 5 jeweils bei einer Umdrehung des Heizrads 2 in die nächstfolgende Stellung der Haltevorrichtung 7 weiter gegeben werden, bevor letztendlich die Übergabe der Vorformlinge 5 an den Auslaufstern 15 erfolgt.

Anders gesagt, ist außer der Bestrahlungsstellung 12 mindestens eine Speicherstellung 75 der Vorformlinge 5 vorgesehen, in denen diese auf dem Heizrad 2 mittransportiert werden, um einen Temperaturausgleich zu ermöglichen, bevor die Vorformlinge 5 an den Auslaufstern 15 übergeben werden. Diese Speicherstellung 75 könnte auch zumindest zeitweise der Beschickungs- und/oder Entnahmestellung 11 entsprechen. Entscheidend ist, dass in der Speicherstellung 75 mindestens eine zusätzliche Umdrehung des Heizrads 2 zum Temperaturausgleich der Vorformlinge 5 bereitgestellt wird.

Die Ausgleichszeit in der Speicherstellung 75 dient im Wesentlichen dazu, ein beim Aufheizen der Vorformlinge 5 in der Heizkammer 4 erzeugtes Temperaturprofil in der Wand der Vorformlinge 5 zu glätten. Mit einer Haltevorrichtung 7 mit zwei Klammern 71 kann beispielsweise eine Ausgleichszeit entsprechend einer Umdrehung des Heizrads 2 auf einfache Weise erzeugt werden. Entsprechend wäre eine Ausgleichszeit entsprechend zwei Umdrehungen des Heizrads 2 mit drei Klammern 71 pro Haltevorrichtung 7 zu erzielen, und in analoger Weise eine Ausgleichszeit entsprechend drei Umdrehungen des Heizrads 2 mit vier Klammern 71 pro Haltevorrichtung 7.

Die Arbeitsweise der dritten Ausführungsform lässt sich anhand der beispielhaft in der Fig. 12 dargestellten Positionen I bis IV wie folgt erklären:

An der Position I werden kalte Vorformlinge 5 von dem Einlaufstern 14 an eine Klammer 71 der Haltevorrichtung 7 übergeben.

An der Position II wird die Haltevorrichtung 7 um 180° gedreht, so dass der zuvor aufgenommene Vorformling 5 bezüglich der Heizkammer 4 ausgerichtet wird und in diese abgesenkt werden kann. An der Position II wird durch die Drehung der Haltevorrichtung 7 gleichzeitig ein zuvor erwärmter Vorformling 5 ebenfalls um 180° nach außen in die Speicherstellung 75 gedreht, wo er zum Temperaturausgleich für eine Umdrehung des Heizrads 2 mit fährt.

An der Position III, bei der die Klammern 71 und die zugehörigen Vorformlinge 5 der Einfachheit halber nicht mehr dargestellt sind, wird der jeweils in der Bestrahlungsstellung 12 innen liegende Vorformling 5 in der Heizkammer 4 aufgeheizt, während der jeweils außen liegende Vorformling 5 zum Temperaturausgleich in der Speicherstellung 75 bis zum Erreichen des Auslaufsterns 15 auf dem Heizrad 2 mitfährt.

An der Position IV erreicht der außen liegende Vorformling 5 nach dem Ende der Ausgleichszeit das Auslaufsternrad 15 und wird von der Speicherstellung 75 ausgehend an das Auslaufsternrad 15 übergeben. Der innen liegende Vorformling 5 kann zu diesem Zeitpunkt noch weiter erwärmt werden, wird jedoch spätestens an der Position II aus der Heizkammer 4 entnommen, um von der innen liegenden Position durch Drehung um 180° in die außen liegende Speicherstellung 75 zu wechseln.

Dies ist in analoger Weise auch bei mehreren Klammern 71 pro Halteeinheit 7 denkbar, wobei jeweils an der Position II ein Stellungswechsel der Klammern 71 in die jeweils nächstfolgende Stellung erfolgt.

Mit Übergabe der Vorformlinge 5 in den oben beschriebenen Ausführungsformen und Varianten lässt sich mit (nicht näher beschriebenen) Sensoren überwachen, um beispielsweise eine Doppelbeladung eines Heizmoduls 3 zu vermeiden, wenn ein Vorformling 5 nicht ordnungsgemäß ausgestoßen werden kann. Auch kann eine Steuerung zum Erkennen einer fehlerhaften oder fehlenden Beladung des Heizmoduls eingerichtet sein, um Energieverschwendung und/oder eine Überhitzung der Heizkammer 4 zu vermeiden, indem diese nicht aufgeheizt wird. Beispielsweise könnte auch bei einer Notaus-Situation in der Produktion ein selbsttätiges Auswerfen des Vorformlings 5 erfolgen.

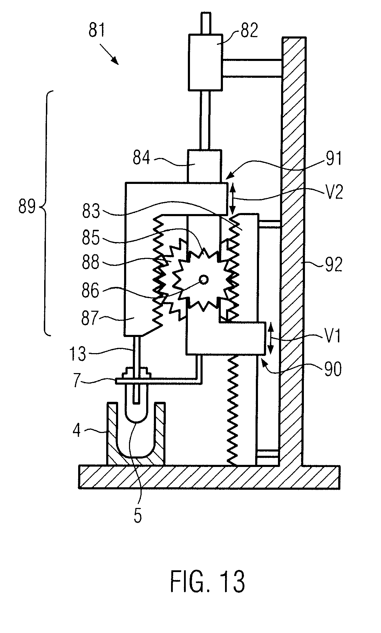

Die Fig. 13 zeigt eine weitere Ausführungsform 81 der Hubvorrichtung 9 zum Heben/Senken des Heizstabs 13 und der Haltevorrichtung 7 mit Hilfe eines gemeinsames Antriebsaggregats 82. Dieses könnte ein Linearmotor, ein Servomotor, ein Pneumatik- oder Hydraulikantrieb, oder ein anderer geeigneter Linearaktor sein. Die Hubvorrichtung 9 umfasst in diesem Fall eine vertikal feststehende erste Zahnstange 83 und einen vertikal an dieser beweglichen und mechanisch, beispielsweise mittels einer Stange, an das Antriebsaggregat 82 gekoppelten Schlitten 84. An diesem ist ein erstes Zahnrad 85 auf einer Welle 86 drehbar gelagert. Das erste Zahnrad 85 greift in die feststehende erste Zahnstange 83 ein.

Vorzugsweise ist eine der Hubvorrichtung 81 zugeordnete Heizkammer 4 starr mit der ersten Zahnstange 83 verbunden. Das heißt, die Heizkammer 4 wird beim Wechsel von der Beschickungsposition 11 in die Bestrahlungsposition 12 nicht angehoben oder abgesenkt. Es wäre allerdings möglich, die Heizkammer 4 trotzdem vertikal verstellbar auszubilden, um die vertikale Position der Heizkammer 4 an die Länge des zu bestrahlenden Vorformlings 5 anzupassen. Die Heizkammer würde für die Bestrahlung eines kurzen Vorformlings 5 dann in einem geringeren Abstand zur Haltevorrichtung 7 und dem Heizstab 13 angeordnet als für die Bestrahlung eines langen Vorformlings 5. Die Hubbewegungen der Haltevorrichtung 7 und des Heizstabs 13 sind in diesem Fall ebenso an die jeweilige Position der Heizkammer 4 anzupassen. Da in der Regel alle Heizkammern 4 des Heizrads 2 mit identischen Vorformlingen 5 bestückt werden und somit alle Heizkammern 4 vorzugsweise eine identische vertikale Position einnehmen, können die Heizkammern 4 bei einer bevorzugten Variante mittels eines gemeinsamen, vertikal verstellbaren Trägers (nicht dargestellt) auf dem Heizrad 2 montiert sein. Dadurch lässt sich die vertikale Position der Heizkammern 4 bezüglich der Haltevorrichtung 7 und des Heizstabs 13 besonders einfach an die Länge des Vorformlings 5 anpassen. Diese Anpassung dient einer Minimierung der Stellwege zwischen der Beschickungsposition 11 in der Bestrahlungsposition 12, insbesondere um die benötigte Prozesszeit pro Vorformling 5 zu verkürzen.

Die Haltevorrichtung 7, und somit auch ein zu bestrahlender Vorformling 5, ist mit dem Schlitten 84 vorzugsweise in vertikaler Richtung starr verbunden. Für den Vorformling 5 kann allerdings eine drehbare Lagerung in der Haltevorrichtung 7 vorgesehen sein (nicht gezeigt). Eine zweite Zahnstange 87 ist an dem Schlitten 84 vertikal beweglich gelagert und kämmt mit einem zweiten Zahnrad 88, das ebenfalls an dem Schlitten 84 drehbar gelagert und mit dem ersten Zahnrad 85 über die Welle 86 verbunden ist. Somit sind die erste und zweite Zahnstange 83, 87 mittels des ersten und zweiten Zahnrads 85, 88 derart aneinander gekoppelt, dass der Antrieb 82 den Schlitten 84 mit der Haltevorrichtung 7 relativ zur ersten Zahnstange 83 und der Heizkammer 4 verschiebt und die zweite Zahnstange 87 mit dem Heizstab 13 zusätzlich durch eine über die Zahnräder 85, 88 übersetzte Linearbewegung relativ zum Schlitten 84.

Die beschriebenen Zahnstangen 83, 87, die Zahnräder 85, 88, der Schlitten 84 und die Welle 86 haben somit die Funktion eines Hubübersetzungsmittels in Form eines mechanischen Getriebes 89, um die Bewegung des Heizstabs 13 and die Bewegung der Haltevorrichtung 7 in synchronisierter Weise zu koppeln, insbesondere in einem festgelegten Verhältnis der zugeordneten Hubgeschwindigkeiten V1 und V2. Wie die Fig. 13 erkennen lässt ergibt sich die Geschwindigkeit des Heizstabs 13 bezüglich der Heizkammer 4 aus der Addition der absoluten Geschwindigkeit V1 des Schlittens 84 und der Relativgeschwindigkeit V2 der zweiten Zahnstange 87 bezüglich des Schlittens 84. Da nur ein gemeinsames Antriebsaggregat 82 pro Heizkammer 4 vorgesehen ist, ergeben sich für die Verschiebung und somit die Stellwege des Schlittens 84 und der zweiten Zahnstange 87 entsprechende Zusammenhänge.

Hierbei kann das Verhältnis der Geschwindigkeit oder Verschiebung des Schlittens 84 und der Haltevorrichtung 7 zu der zusätzlichen Geschwindigkeit oder Verschiebung der zweiten Zahnstange 87 mit dem Heizstab 13 durch das Verhältnis der Durchmesser der Zahnräder 85, 88 eingestellt werden, oder bei einander entsprechender Zahngröße durch die jeweilige Zahl der Zähne. Es versteht sich von selbst, dass die Zahnung der Zahnräder 85, 88 und der Zahnstangen 83, 87 beliebig fein sein könnte, je nach Reibungsverhalten der ineinander greifenden Komponenten. Es wäre also auch denkbar, dass die Zahnräder 85, 88 und die Zahnstangen 83, 87 im Extremfall durch funktionell vergleichbare Elemente ersetzt werden, die nur oder überwiegend einen Kraftschluss zueinander herstellen, wie dies beispielsweise bei Reibrädern der Fall ist. Dann könnten die Zahnstangen 83, 88 durch geeignete Laufschienen ersetzt werden. Alternativ könnte auch ein zusätzliches Getriebe (nicht gezeigt) oder dergleichen an dem Schlitten 84, insbesondere zwischen den Zahnrädern 85, 88, vorgesehen sein.

Entscheidend ist hier, dass an der Hubvorrichtung 9 eine Antriebskopplung und Hubübersetzung zwischen der Haltevorrichtung 7 und dem Heizstab 13 vorgesehen ist. Diese bewirkt, dass die Haltevorrichtung 7 mit dem Vorformling 5 sowie der Heizstab 13 gemeinsam angetrieben werden können und dabei unterschiedliche Wegstrecken zurücklegen, sich somit mit unterschiedlichen absoluten Geschwindigkeiten auf die zugeordnete Heizkammer 4 zu oder von dieser weg bewegen. Bei einem Übersetzungsverhältnis von 1:1, also bei einem identischen Durchmesser der Zahnräder 85, 88 legt der Heizstab 13 bezüglich der Heizkammer 4 jeweils den doppelten Weg zurück wie der in der Haltevorrichtung 7 gehaltene Vorformling 5. Somit lassen sich die Bewegung des Heizstabs 13 und der Haltevorrichtung 7 in einem festgelegten Verhältnis durch das Übersetzungsgetriebe 89 koppeln.

Dabei lässt sich das Verhältnis der beiden Linearbewegungen an die Abmessungen des zu erwärmenden Vorformlings 5 anpassen, so dass ein reproduzierbarer und koordinierter Wechsel der Haltevorrichtung 7 und des Heizstabs 13 zwischen der Beschickungs- und/oder Entnahmestellung 11 und der Bestrahlungsstellung 12 gewährleistet ist. Dadurch ist eine exakte Positionierung der Haltevorrichtung 7 und des Heizstabs 13 relativ zum Ofen, aber auch relativ zueinander, jederzeit sichergestellt. Beispielsweise sind Kollisionen der dabei bewegten Komponenten auch bei Notabschaltungen weitgehend ausgeschlossen.

Zur Lagerung des Schlittens 84 und der Zahnstange 87 sind geeignete Lagerungen 90, 91 vorgesehen, deren Funktionsweise allgemein bekannt ist, so dass auf deren Beschreibung an dieser Stelle verzichtet werden kann. Der Vollständigkeit halber ist in Fig. 13 ein Halterahmen 92 angedeutet, der beispielsweise Bestandteil eines Heizrads sein kann.

Mit der Ausführungsform 81 lässt sich eine besonders kompakte und schmale Bauform der Hubvorrichtung 9 realisieren. Es versteht sich von selbst, dass die Darstellung in der Fig. 13 diesbezüglich lediglich schematisch ist. Einzelne Heizstationen lassen sich in der Folge mit besonders enger Teilung auf einem Heizrad montieren. Gewicht und Kosten für ein zweites Antriebsaggregat der Heizstationen können eingespart werden, einschließlich der zusätzlichen Antriebsenergie und der zugeordneten Steuerungs- und Überwachungseinheiten. Ferner wird eine synchronisierte Bewegung des gehaltenen Vorformlings 5 und des Heizstabs 13 auf einfache Weise erzwungen und Beschädigungen oder ein Produktionsausschuss aufgrund Kollisionen oder mangelnder Synchronisierung vermieden.

Somit kann auf einfache und zuverlässige Weise gewährleistet werden, dass der Vorformling 5 zumindest über eine mindestens seiner Länge entsprechende Wegstrecke in die Heizkammer 4 abgesenkt werden kann, während der Heizstab 13 über eine längere Wegstrecke abgesenkt werden muss, beispielsweise um zusätzlich durch eine der erfindungsgemäßen Varianten der Haltevorrichtung 7 abgesenkt zu werden. Es versteht sich von selbst, dass sich die Hubvorrichtung 9 mit Antriebskopplung und Hubübersetzung durch das Getriebe 89 auch mit anderen der beschriebenen Ausführungsformen in technisch vorteilhafter Weise kombinieren ließe.

## Patentansprüche

1. Ofen vom Rundläufertyp zum Konditionieren von Vorformlingen (5), insbesondere für das Streckblasen von Kunststoffgefäßen, mit einem Heizrad (2), an dem mehrere Heizmodule (3) zum Erwärmen je eines Vorformlings (5) angeordnet sind, wobei die Heizmodule (3) jeweils eine Heizkammer (4) zum Bestrahlen des Vorformlings (5) mit Infrarotstrahlung umfassen, und eine Haltevorrichtung (7) zum Halten des Vorformlings (5),
**dadurch gekennzeichnet, dass**
die Heizmodule (3) ferner jeweils eine individuell ansteuerbare Hubvorrichtung (9) zum Heben und Senken der Haltevorrichtung (7) und/oder der Heizkammer (4) umfassen, um zwischen einer Beschickungs- oder Entnahmestellung (11), bei der der Vorformling (5) in Richtung seiner Hauptachse (5') mit der Heizkammer (4) nicht überlappt, und einer Bestrahlungsstellung (12), bei der ein Abschnitt (5a) des Vorformlings (5) innerhalb der Heizkammer (4) angeordnet ist, zu wechseln.

2. Ofen nach Anspruch 1, **dadurch gekennzeichnet, dass** die Heizmodule (3) ferner einen Heizstab (13) zum Bestrahlen des Vorformlings (5) mit Infrarotstrahlung umfassen, und dass die Hubvorrichtung (9) ferner zum Heben und Senken der Haltevorrichtung (7) und/oder des Heizstabs (13) eingerichtet ist, um zwischen einer Beschickungs- oder Entnahmestellung (11), bei der außerdem die Haltevorrichtung (7) und der Vorformling (5) in Richtung seiner Hauptachse (5') mit dem Heizstab (13) nicht überlappen, und einer Bestrahlungsstellung (12), bei der außerdem ein Abschnitt (13a) des Heizstabs (13) innerhalb des Vorformlings (5) angeordnet ist, zu wechseln.

3. Ofen nach Anspruch 1 oder 2, **dadurch gekennzeichnet, dass** an dem Heizrad (2) ein mit dem Heizrad koaxiales Stützrad (17) zum Abstützen der Vorformlinge (5) an einem jeweils an dem Vorformling ausgebildeten Tragring (5b) vorgesehen ist, und dass die Haltevorrichtung (7) eine Haltekappe (18) umfasst, die auf einen Mündungsbereich (5c) des Vorformlings abgesenkt werden kann, um den Tragring (5a) des Vorformlings gegen das Stützrad (17) zu pressen, wobei in der Haltekappe (18) insbesondere eine Ausnehmung (18b) zum Durchführen eines Heizstabs (13) ausgebildet ist.

4. Ofen nach mindestens einem der vorigen Ansprüche, **dadurch gekennzeichnet, dass** die Haltevorrichtung (7) einen Greifer (21, 21', 22) zum Halten des Vorformlings (5) an einem Mündungsbereich (5c) des Vorformlings umfasst, wobei insbesondere in dem Greifer (21, 22) eine Ausnehmung (21 a, 22a) zum Durchführen eines Heizstabs (13) ausgebildet ist und/oder der Greifer (21') eine Spannzange ist.

5. Ofen nach Anspruch 4, **dadurch gekennzeichnet, dass** der Greifer (22) eine Rollenklammer (23) ist, die so ausgebildet ist, dass der Vorformling (5) gleichzeitig gehalten und um seine Hauptachse (5') gedreht werden kann.

6. Ofen nach mindestens einem der vorigen Ansprüche, **dadurch gekennzeichnet, dass** an der Heizkammer (3) eine segmentierte Auflageplatte (19) für einen an dem Vorformling (5) ausgebildeten Tragring (5b) vorgesehen ist, wobei sich die Segmente der Auflageplatte (19) zum Einführen des Vorformlings (5) in die Heizkammer (4) auseinander bewegen lassen.

7. Ofen nach Anspruch 6, **dadurch gekennzeichnet, dass** an den Segmenten der Auflageplatte (19) Greifelemente (20) vorgesehen sind, die durch Zusammenführen der Segmente mit einem Mündungsbereich (5c) des Vorformlings (5) in Eingriff gebracht werden können, um den Vorformling (5) radial und/oder axial bezüglich der Heizkammer (4) zu fixieren.

8. Ofen nach mindestens einem der Ansprüche 1 bis 5, **dadurch gekennzeichnet, dass** an der Heizkammer (4) eine segmentierte Auflageplatte 53 für einen an dem Vorformling (5) ausgebildeten Tragring (5b) vorgesehen ist, wobei sich die Segmente der Auflageplatte (53), insbesondere gegen eine Federvorspannung, zum Ausstoßen des Vorformlings (5) in axialer Richtung auseinander drücken lassen, insbesondere durch Einklappen der Segmente in die Heizkammer (4), und dass an der Heizkammer (4) ferner eine, insbesondere gegen eine Federvorspannung, ausklappbare Bodenklappe (51) vorgesehen ist, so dass der Vorformling (5) durch Öffnen der Bodenklappe (51) ausgestoßen werden kann.

9. Ofen nach mindestens einem der vorigen Ansprüche, **dadurch gekennzeichnet, dass** das an der Heizkammer (4) eine wasserdicht abschließende Bodenklappe (51) vorgesehen ist, so dass die Heizkammer (4) mit einer Reinigungsflüssigkeit geflutet und diese durch Öffnen der Bodenklappe (51) abgelassen werden kann.

10. Ofen nach Anspruch 2, **dadurch gekennzeichnet, dass** die Hubvorrichtung (9) zum Heben und Senken des Heizstabs (13) eingerichtet ist, wobei der Hub zwischen der Beschickungs- oder Entnahmestellung (11) und der Bestrahlungsstellung (12), insbesondere eine untere Endposition des Heizstabs (13) in der Bestrahlungsstellung (12), einstellbar ist.

11. Ofen nach Anspruch 10, **dadurch gekennzeichnet, dass** zur Einstellung des Hubs und/oder der Endposition eine veränderliche Steuerkurve (31) vorgesehen ist.

12. Ofen nach Anspruch 10, **dadurch gekennzeichnet, dass** die Hubvorrichtung (9) einen Schlitten (33) zum Heben und Senken des Heizstabs (13) umfasst, wobei zur Begrenzung des Schlittenhubs, insbesondere an der unteren Endposition des Heizstabs (13), ein Anschlagmechanismus (39) vorgesehen ist.

13. Ofen nach mindestens einem der vorigen Ansprüche, **dadurch gekennzeichnet, dass** die Haltevorrichtung (7) mindestens zwei schwenkbare Greifer (71) umfasst, um einen in der Heizkammer (4) zu erwärmenden Vorformling (5) in der Bestrahlungsstellung (12) und gleichzeitig mindestens einen weiteren, in der Heizkammer (4) zuvor erwärmten Vorformling (5) in einer Speicherstellung (75) zu halten, wobei die Greifer (71) so eingerichtet sind, dass bei einem Stellungswechsel ein Greifer (71) aus der Bestrahlungsstellung (12) in die Speicherstellung (75) wechselt und ein Greifer (71) aus der Speicherstellung (75) in die Bestrahlungsstellung (12).

14. Ofen nach mindestens einem der Ansprüche 2 bis 5 und 10 bis 12, **dadurch gekennzeichnet, dass** die Hubvorrichtung (9) ein gemeinsames Antriebsaggregat (82) zum Heben/Senken der Haltevorrichtung (7) und des Heizstabs (13) umfasst sowie ein Hubübersetzungsmittel (89), insbesondere ein Getriebe, das den Heizstab und die Haltevorrichtung verbindet, um ferner den Heizstab relativ zur Haltevorrichtung mit dem Antriebsaggregat zu heben/senken.

## Claims

1. Rotary-type furnace for conditioning preforms (5), in particular for stretch blowing plastic containers, having a heating wheel (2) at which several heating modules (3) for heating one preform (5) each are arranged, the heating modules (3) each comprising a heating chamber (4) for radiating the preform (5) with infrared radiation and a holding device (7) for holding the preform (5),
**characterized in that**
the heating modules (3) each further comprise an individually controllable lifting device (9) for lifting and lowering the holding device (7) and/or the heating chamber (4) to change between a loading or withdrawal position (11), in which the preform (5) does not overlap with the heating chamber (4) in the direction of its main axis (5'), and a radiation position (12) in which a section (5a) of the preform (5) is arranged within the heating chamber (4).

2. Furnace according to claim 1, **characterized in that** the heating modules (3) furthermore comprise a heating rod (13) for radiating the preform (5) with infrared radiation, and that the lifting device (9) is further adapted for lifting and lowering the holding device (7) and/or the heating rod (13) to change between a loading or withdrawal position (11), in which moreover the holding device (7) and the preform (5) do not overlap with the heating rod (13) in the direction of the main axis (5') of the perform (5), and a radiation position (12) in which moreover a section (13a) of the heating rod (13) is arranged within the preform (5).

3. Furnace according to claim 1 or 2, **characterized in that** a support wheel (17) coaxial with the heating wheel (2) is provided at the heating wheel for supporting the preforms (5) at a supporting ring (5b) embodied at each preform, and that the holding device (7) comprises a holding cap (18) that can be lowered to an opening region (5c) of the preform to press the supporting ring (5a) of the preform against the support wheel (17), in particular a recess (18b) for passing through a heating rod (13) being embodied in the holding cap (18).

4. Furnace according to at least one of the preceding claims, **characterized in that** the holding device (7) comprises a gripper (21, 21', 22) for holding the preform (5) at an opening region (5c) of the preform, in particular in the gripper (21, 20, 22) a recess (21 a, 22a) for passing through a heating rod (13) being embodied and/or the gripper (21') being a collet chuck.

5. Furnace according to claim 4, **characterized in that** the gripper (22) is a roll clamp (23) which is embodied such that the preform (5) can be simultaneously held and rotated about its main axis (5').

6. Furnace according to at least one of the preceding claims, **characterized in that** a segmented bearing plate (19) for a supporting ring (5b) embodied at the preform (5) is provided at the heating chamber (4), wherein the segments of the bearing plate (19) can be moved apart for introducing the preform (5) into the heating chamber (4).

7. Furnace according to claim 6, **characterized in that**, at the segments of the bearing plate (19), gripping elements (20) are provided which can be engaged with an opening region (5c) of the preform (5) by joining the segments to fix the preform (5) radially and/or axially with respect to the heating chamber (4).

8. Furnace according to at least one of claims 1 to 5, **characterized in that** a segmented bearing plate (53) for a supporting ring (5b) embodied at the perform (5) is provided at the heating chamber (4), whereby the segments of the bearing plate (53) can be pushed apart, in particular against the pretension of a spring, for ejecting the preform (5) in the axial direction, in particular by folding in the segments into the heating chamber, and whereby furthermore a folding bottom flap (51) that can be folded out in particular against the pretension of a spring is provided at the heating chamber (4), so that the preform (5) can be ejected by opening the bottom flap (51).

9. Furnace according to at least one of the preceding claims, **characterized in that** a watertight sealing bottom flap (51) is provided at the heating chamber (4), so that the heating chamber (4) can be flooded with a cleaning fluid and the latter can be drained by opening the bottom flap (51).

10. Furnace according to claim 2, **characterized in that** the lifting device (9) is adapted for lifting and lowering the heating rod (13), the lift being adjustable between the loading or withdrawal position (11) and the radiation position (12), in particular a lower end position of the heating rod (13) in the radiation position (12).

11. Furnace according to claim 10, **characterized in that** for adjusting the lift and/or the end position, a variable lifting control cam (31) is provided.

12. Furnace according to claim 10, **characterized in that** the lifting device (9) comprises a slide (33) for lifting and lowering the heating rod (13), a stop mechanism (39) being provided in particular at the lower end position of the heating rod (13) for limiting the slide lift.

13. Furnace according to at least one of the preceding claims, **characterized in that** the holding device (7) comprises at least two swiveling grippers (71) to hold a preform (5) to be heated in the heating chamber (4) in the radiation position (12) and simultaneously hold at least one further preform (5) previously heated in the heating chamber (4) in a storage position (75), the grippers (71) being adjusted such that during a change of position one gripper (71) changes from the radiation position (12) to the storage position (75), and one gripper (71) changes from the storage position (75) to the radiation position (12).

14. Furnace according to at least one of claims 2 to 5 and 10 to 12, **characterized in that** the lifting device (9) comprises a common drive unit (82) for lifting/lowering the holding device (7) and the heating rod (13), as well as lift translating means (89), in particular a transmission, that connects the heating rod and the holding device to furthermore lift/lower the heating rod relative to the holding device with the common drive unit.

## Revendications

1. Four du type rotatif pour le conditionnement d'ébauches ou de préformes (5), notamment destinées au soufflage-étirage de récipients ou contenants en matière plastique, comprenant une roue de chauffage (2) sur laquelle sont agencés plusieurs modules chauffants (3) destinés à échauffer chacun une préforme (5), les modules chauffants (3) comportant chacun respectivement une chambre de chauffage (4) pour irradier la préforme (5) avec un rayonnement infrarouge, ainsi qu'un dispositif de maintien (7) pour maintenir la préforme (5),
**caractérisé en ce que** les modules chauffants (3) comportent, par ailleurs, un dispositif de levage (9) pouvant être commandé individuellement pour soulever et abaisser le dispositif de maintien (7) et/ou la chambre de chauffage (4), en vue d'alterner entre une position de chargement ou de prélèvement (11), dans laquelle la préforme (5) n'est pas en chevauchement avec la chambre de chauffage (4) dans la direction de son axe principal (5'), et une position d'irradiation (12) dans laquelle un tronçon (5a) de la préforme (5) est agencé à l'intérieur de la chambre de chauffage (4).

2. Four selon la revendication 1, **caractérisé en ce que** les modules chauffants (3) comportent, par ailleurs, un barreau chauffant (13) pour irradier la préforme (5) avec un rayonnement infrarouge, et **en ce que** le dispositif de levage (9) est par ailleurs configuré pour soulever et abaisser le dispositif de maintien (7) et/ou le barreau chauffant (13), en vue d'alterner entre une position de chargement ou de prélèvement (11), dans laquelle, en outre, le dispositif de maintien (7) et la préforme (5), dans la direction de son axe principal (5'), ne sont pas en chevauchement avec le barreau chauffant (13), et une position d'irradiation (12) dans laquelle, en outre, un tronçon (13a) du barreau chauffant (13) est agencé à l'intérieur de la préforme (5).

3. Four selon la revendication 1 ou la revendication 2, **caractérisé en ce que** sur la roue de chauffage (2), il est prévu une roue de support (17) coaxiale à la roue de chauffage, pour supporter les préformes (5) respectivement au niveau d'un anneau de support (5b) formé sur la préforme, et **en ce que** le dispositif de support (7) comporte un chapeau de maintien (18), qui peut être abaissé sur une zone d'embouchure (5c) de la préforme, en vue de presser l'anneau de support (5a) de la préforme contre la roue de support (17), un évidement (18b) étant notamment formé dans le chapeau de maintien (18) pour y faire passer un barreau chauffant (13).

4. Four selon l'une au moins des revendications précédentes, **caractérisé en ce que** le dispositif de support (7) comporte un préhenseur (21, 21', 22) pour maintenir la préforme (5) au niveau d'une zone d'embouchure (5c) de la préforme, un évidement (21a, 22a) étant notamment formé dans le préhenseur (21, 22) pour le passage d'un barreau chauffant (13), et/ou le préhenseur (21') étant une pince de serrage.

5. Four selon la revendication 4, **caractérisé en ce que** le préhenseur (22) est une pince à galets (23), qui est réalisée de telle façon que la préforme (5) puisse simultanément être maintenue et être tournée autour de son axe principal (5').

6. Four selon l'une au moins des revendications précédentes, **caractérisé en ce que** sur la chambre de chauffage (3) est prévue une plaque d'appui segmentée (19) pour un anneau de support (5b) formé sur la préforme (5), les segments de la plaque d'appui (19) pouvant être déplacés de manière à s'écarter mutuellement pour l'introduction de la préforme (5) dans la chambre de chauffage (4).

7. Four selon la revendication 6, **caractérisé en ce que** sur les segments de la plaque d'appui (19) sont prévus des éléments de préhension (20), qui, par rapprochement mutuel des segments, peuvent être amenés en prise avec une zone d'embouchure (5c) de la préforme (5), en vue de fixer la préforme (5) radialement et/ou axialement par rapport à la chambre de chauffage (4).

8. Four selon l'une au moins des revendications 1 à 5, **caractérisé en ce que** sur la chambre de chauffage (4) est prévue une plaque d'appui segmentée (53) pour un anneau de support (5b) formé sur la préforme (5), les segments de la plaque d'appui (53) pouvant être repoussés en direction axiale, notamment à l'encontre d'une précontrainte de ressort, de manière à s'écarter, pour éjecter la préforme (5), notamment par basculement des segments vers l'intérieur de la chambre de chauffage (4), et **en ce que** sur la chambre de chauffage (4) est, par ailleurs, prévu un volet de fond (51) pouvant être basculé vers l'extérieur, notamment à l'encontre d'une précontrainte de ressort, de sorte que la préforme (5) peut être éjectée par ouverture du volet de fond (51).

9. Four selon l'une au moins des revendications précédentes, **caractérisé en ce que** sur la chambre de chauffage (4) est prévu un volet de fond (51) fermant de manière étanche à l'eau, de sorte que la chambre de chauffage (4) peut être inondée avec un liquide de nettoyage et celui-ci peut être évacué par ouverture du volet de fond (51).

10. Four selon la revendication 2, **caractérisé en ce que** le dispositif de levage (9) est configuré pour soulever et abaisser le barreau chauffant (13), la course de levage pouvant être réglée entre la position de chargement ou de prélèvement (11) et la position d'irradiation (12), notamment une position terminale inférieure du barreau chauffant (13) dans la position d'irradiation (12).

11. Four selon la revendication 10, **caractérisé en ce que** pour régler la course de levage et/ou la position terminale, il est prévu une came de commande (31) variable.

12. Four selon la revendication 10, **caractérisé en ce que** le dispositif de levage (9) comprend un chariot (33) pour soulever et abaisser le barreau chauffant (13), un mécanisme de butée (39) étant prévu pour limiter la course de déplacement du chariot, notamment au niveau de la position terminale inférieure du barreau chauffant (13).

13. Four selon l'une au moins des revendications précédentes, **caractérisé en ce que** le dispositif de maintien (7) comporte au moins deux préhenseurs pivotants (71) pour maintenir une préforme (5) devant être échauffée dans la chambre de chauffage (4), dans la position d'irradiation (12), et maintenir simultanément au moins une autre préforme (5) ayant été échauffée auparavant dans la chambre de chauffage (4), dans une position de stockage (75), les préhenseurs (71) étant configurés de telle façon que lors d'un changement de position, un préhenseur (71) change de la position d'irradiation (12) à la position de stockage (75), et un préhenseur (71) change de la position de stockage (75) à la position d'irradiation (12).

14. Four selon l'une au moins des revendications 2 à 5 et 10 à 12, **caractérisé en ce que** le dispositif de levage (9) comprend un groupe d'entraînement commun (82) pour le soulèvement/l'abaissement du dispositif de maintien (7) et du barreau chauffant (13), ainsi qu'un moyen de démultiplication de course de déplacement (89), notamment une transmission, qui relie le barreau chauffant et le dispositif de maintien, pour, en outre, soulever/abaisser le barreau chauffant par rapport au dispositif de maintien à l'aide du groupe d'entraînement.
